# FASCICULE DE BREVET EUROPEEN

(11) **EP 1 733 162 B1**
(45) Date de publication et mention de la délivrance du brevet: **09.01.2008**
(21) Numéro de dépôt: 05746702.9
(22) Date de dépôt: 30.03.2005
(51) Int. Cl.: F16K 31/08

(54) **VANNE COMPRENANT UN DISPOSITIF DE COMMANDE MAGNETIQUE**
VENTIL MIT MAGNETISCHER STEUEREINHEIT
VALVE COMPRISING A MAGNETIC CONTROL DEVICE

(30) Priorité: 02.04.2004 FR 0403456
(43) Date de publication de la demande: 20.12.2006
(73) Titulaire: SIDEL PARTICIPATIONS, 76930 Octeville-sur-Mer (FR)
(72) Inventeur: SABIRON, Gérard c/o Sidel, F-76930 Octeville-sur-Mer (FR); SERIN, Jean-Jacques c/o Sidel, F-76930 Octeville-sur-Mer (FR); DECARNE, Patrick c/o Sidel, F-76930 Octeville-sur-Mer (FR)
(74) Mandataire: Gorrée, Jean-Michel
(86) Numéro de dépôt international: PCT/FR2005/000774
(87) Numéro de publication internationale: WO 2005/098296

(56) Documents cités:
- EP-A- 0 436 214
- DE-A- 1 911 649
- DE-A- 1 931 799
- FR-A- 2 688 286

## Description

La présente invention concerne des perfectionnements aux vannes comprenant un obturateur se déplaçant dans une chambre dont une extrémité est pourvue d'un siège contre lequel l'obturateur est en appui dans une position de fermeture de la vanne ou en est éloigné dans une position d'ouverture de la vanne, et dans lesquelles le mouvement de l'obturateur est obtenu par un dispositif de commande magnétique disposé à l'extérieur de la chambre et couplé magnétiquement avec l'obturateur.

De telles vannes sont notamment destinées à être utilisées dans des machines de remplissage de produits alimentaires, en particulier des liquides.

Le document EP 0436214 décrit une vanne à commande magnétique équipée d'un obturateur et d'un organe de commande placé à l'extérieur du corps tubulaire de la vanne. L'obturateur et l'organe de commande possèdent des parties aimantées, et l'organe de commande est déplaçable le long du corps, de sorte que l'attraction magnétique exercée lorsque l'organe de commande se déplace provoque alors le déplacement de l'obturateur de façon à ouvrir ou fermer l'orifice de sortie de la vanne. Dans cette vanne, l'organe de commande extérieur est déplacé par un système pneumatique qui est intégré dans le corps de la vanne.

Toutefois, un tel dispositif présente l'inconvénient de présenter des forces de frottement importantes entre l'obturateur et la paroi interne de la chambre, puisque l'obturateur, qui est attiré par l'aimant situé à l'extérieur, peut se trouver plus ou moins collé à ladite paroi interne. Il en résulte des risques d'usure prématurée de la paroi et/ou de l'obturateur, et/ou un dépôt de particules dans la chambre et leur passage dans le liquide à distribuer ; en outre, une telle vanne est difficile à nettoyer, en particulier au niveau des zones de frottement, dans lesquelles le liquide de nettoyage ne peut pas circuler, ou seulement difficilement circuler.

Le but de l'invention est de réaliser un agencement de vanne dans lequel les zones de frottement entre le corps de la vanne et l'obturateur sont réduites, voire supprimées, afin de s'affranchir des inconvénients mentionnés.

Selon l'invention, une vanne comprenant un obturateur disposé dans une chambre ménagée dans le corps de la vanne, une extrémité de ladite chambre étant pourvue d'un siège contre lequel une partie, formant clapet, de l'obturateur est en appui dans une position de fermeture de la vanne et en est éloigné dans une position d'ouverture de la vanne, et un dispositif de commande magnétique comportant des moyens d'entraînement magnétique de l'obturateur, disposés à l'extérieur de la chambre, pour le mettre soit dans sa position de fermeture soit dans sa position d'ouverture, est caractérisée en ce que le dispositif de commande magnétique comporte par ailleurs au moins une bille en matériau magnétique disposée dans la chambre et qui est couplée avec les moyens d'entraînement magnétique extérieurs, ladite bille étant associée à l'obturateur afin de l'entraîner dans la chambre lorsque la bille est elle-même entraînée par les moyens d'entraînement magnétique extérieurs.

Selon d'autres caractéristiques de l'intention
- la bille tourne librement relativement à l'obturateur ;
- l'obturateur comporte au moins un logement dans lequel est placée au moins une bille ;
- la vanne est agencée pour permettre le centrage de l'obturateur dans le corps de la vanne ;
- l'obturateur est associé à au moins deux billes qui coopèrent avec celui-ci et la paroi latérale interne de la chambre de façon à réaliser le centrage sous l'action des moyens d'entraînement magnétique extérieurs ;
- les moyens de centrage sont disposés sur la paroi latérale interne de la chambre de façon à coopérer avec l'obturateur ;
- les moyens de centrage sont disposés sur l'obturateur de façon à coopérer avec la paroi latérale interne de la chambre ;
- les moyens de centrage sont des ailettes ;
- l'obturateur est associé à au moins deux billes décalées longitudinalement par rapport à l'axe de l'obturateur ;
- au moins une section de l'obturateur est associée à au moins deux billes de sorte que les billes présentes sont décalées angulairement l'une par rapport à l'autre ;
- deux sections sont équipées d'au moins deux billes disposées de façon à ce que le décalage angulaire entre deux billes successives d'une même section soit inférieur ou égal à 180° ;
- les (n) billes d'une section sont décalées angulairement d'un angle égal à 360°/n.

D'autres caractéristiques et avantages de l'invention apparaîtront à la lecture de la description détaillée qui suit faite à la lueur des figures annexées dans lesquelles :
- la figure 1 est une vue schématique en coupe axiale d'un mode de réalisation d'une vanne selon l'invention dont le dispositif de commande magnétique comprend une seule bille ;
- la figure 2 est une vue schématique en coupe transversale AA de la figure 1 ;
- la figure 3 est une vue schématique en coupe axiale d'une première variante de la vanne selon l'invention, et dont le dispositif de commande magnétique comprend deux billes non placées sur une même section ;
- la figure 4 est une vue schématique en coupe axiale d'une seconde variante de la vanne selon l'invention dont le dispositif de commande magnétique comprend deux billes placées sur une même section ;
- la figure 5 est une vue schématique en coupe axiale d'une troisième variante de la vanne équipée de deux dispositifs de commande magnétique comprenant chacun deux billes placées sur la même section transversale ;
- la figure 6 est une vue schématique en coupe transversale de l'un des dispositifs de commande de la figure 5 ;
- la figure 7 est une vue schématique en coupe axiale de la figure 6, qui constitue en fait une vue plus détaillée des zones immédiatement au-dessus et au-dessous du repère de coupe BB porté sur la figure 5 ;
- la figure 8 est une vue schématique en coupe axiale d'une autre variante avec plus d'une bille ;
- la figure 9 est une vue schématique en coupe transversale CC de la vanne selon la figure 9, au niveau d'un plan défini par une bille et les moyens d'entraînement.

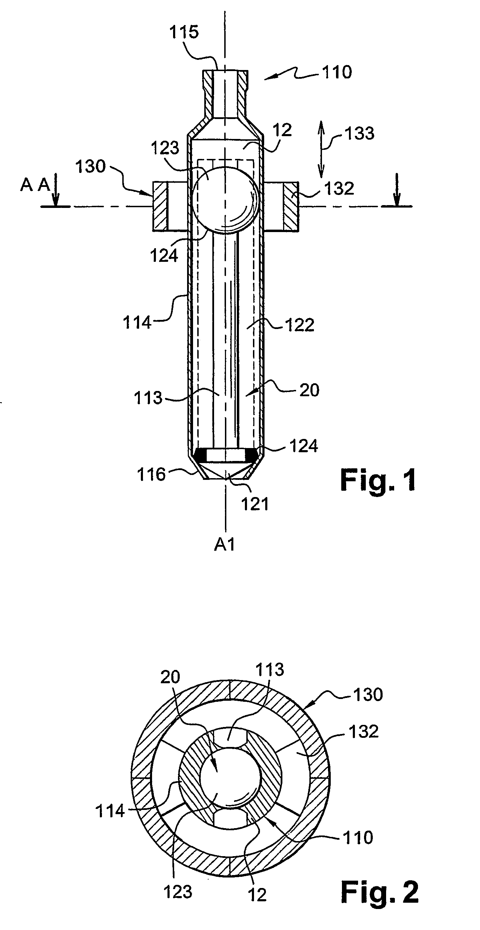

Sur la figure 1, est représentée une vanne 110 qui est destinée à être installée par exemple dans une installation de remplissage de récipients.

La vanne 110 a une structure générale tubulaire. En son centre, elle comporte une chambre 12, ici de section cylindrique, qui est délimitée par un tube central d'axe A1.

Dans la description qui suit, les termes inférieurs, supérieur, haut, bas, etc... sont utilisés en référence aux dessins pour une plus grande facilité de compréhension. Ils ne doivent pas être compris comme étant des limitations de la portée de l'invention, notamment quant à l'orientation de la vanne. En effet, l'orientation verticale de l'axe A1 de la vanne n'est qu'un mode préféré de réalisation.

Dans l'exemple, la vanne comporte, à sa partie supérieure, un orifice 115 destiné à être relié à un réservoir d'alimentation (non représenté) et qui débouche dans la chambre 12. Cet orifice 115 est de section rétrécie par rapport à la section transversale de la chambre 12. La partie inférieure de la chambre 12 s'achève sur un siège 116 d'obturation destiné à recevoir une partie correspondante de l'obturateur 20. De façon connue, le siège 116 a une forme générale tronconique et est prolongé vers le bas par une portion cylindrique de diamètre inférieur au diamètre de la chambre 12, formant l'orifice de sortie de la vanne proprement dit.

L'obturateur 20 comporte deux parties principales :
- une première, constituée par un clapet 121 en matériau amagnétique, qui présente une section tronconique et qui est destiné à coopérer avec le siège 116 de la vanne de façon en position de fermeture. L'étanchéité est renforcée par la présence d'un joint 124 entourant le clapet 121.
- une seconde, en forme de fût 122, situé dans le prolongement axial du clapet et constituée en matériau amagnétique tel que l'inox. La section transversale extérieure du fût 122 est en tous points inférieure à la section transversale intérieure de la chambre 12, de sorte que l'obturateur 20 peut se déplacer librement dans la chambre 12 dans les deux sens selon la direction de l'axe A1.

Conformément à l'invention, le dispositif de commande, quant à lui, comprend des moyens 130 d'entraînement, constitués ici à base de bobines ou d'aimants 132, qui sont placés à l'extérieur du corps de la vanne, donc de la chambre 12, et une bille 123 en matériau magnétique, placée à l'intérieur de la chambre 12.

Ainsi, la bille est par exemple réalisée en fer doux, en fer pur ou en un alliage de l'un et/ou l'autre de ces matériaux.

Conformément à l'invention, la bille 123 est associée à l'obturateur 20 afin de l'entraîner en translation dans le corps de la vanne lorsque la bille est elle-même entraînée par les bobines ou aimants 132. A cet effet, un logement 124 transversal est réalisé dans le corps de l'obturateur 20, par exemple à proximité du sommet du fût et la bille est disposée dans le logement. Les dimensions du logement sont telles que la bille peut tourner librement à l'intérieur.

De plus, le diamètre de la bille 123 est sensiblement inférieur à la section transversale intérieure de la chambre 12, de sorte que la bille peut rouler librement dans la chambre 12 en étant maintenue dans le logement 124 de l'obturateur 20, logement dans lequel elle tourne librement également.

De façon connue en soi, les moyens 130 d'entraînement, avec les bobines au aimants 132, sont placés à l'extérieur du corps de la vanne, et peuvent être déplacés selon une direction parallèle à l'axe A1 (double flèche 133), du haut vers le bas (sens de fermeture) ou du bas vers le haut (sens d'ouverture de la vanne) de façon à entraîner simultanément la bille, qui elle-même déplace l'obturateur 20. Le déplacement des moyens 130 d'entraînement peut être effectué par tout dispositif approprié (non représenté), tel qu'un vérin, permettant un tel entraînement.

La figure 2 est une vue schématique en coupe transversale AA du dispositif de commande de la figure 1. On distingue dans son ensemble le corps tubulaire de la vanne délimitant la chambre 12 dans laquelle se déplace l'obturateur 20. A l'extérieur du corps de la vanne se trouve les moyens 130 d'entraînement. Dans l'exemple, ces moyens 130 d'entraînement portent deux aimants 132 diamétralement opposés de part et d'autre de la paroi extérieure du corps tubulaire de façon à orienter les lignes de flux magnétique pour qu'elles convergeant sensiblement vers le centre de la bille 123 pour obtenir le meilleur couplage possible.

Pour permettre le passage du fluide de part et d'autre de la bille 123, il est prévu au moins une gorge 113 longitudinale, qui est usinée dans la paroi interne de la chambre. De préférence, comme dans l'exemple, au moins deux gorges 113 sont prévues, qui sont réparties régulièrement à la périphérie de la chambre : ici, deux gorges sont représentées, qui sont diamétralement opposées. Elles sont usinées sur toute la section axiale de la chambre 12. La bille, quant à elle est prise entre deux zones 114 en arc de cercle qui sont séparées l'une de l'autre par les gorges 113, la distance entre les zones étant légèrement supérieure au diamètre de la bille, et les aimants sont préférentiellement disposés en regard de ces zones. Ainsi, selon le sens d'orientation du champ magnétique produit par les bobines ou aimants, la bille "roule" préférentiellement sur l'une des zones, qui constitue une zone de roulement. Il convient de noter que l'autre zone n'est pas en contact avec la bille, mais facilite le centrage de cette dernière lors du montage de la vanne ; en outre, elle pourrait très bien devenir zone d'appui au cas ou le sens de montage des aimants serait inversé, par exemple suite à une opération de maintenance. Lorsque l'obturateur est déplacé en position d'ouverture, le fluide peut s'écouler dans les deux gorges 113 aménagées à cet effet.

La vanne est amenée en position fermée ou en position ouverte en déplaçant le dispositif de commande magnétique dans un sens approprié. Le fonctionnement est optimisé si la vanne est positionnée dans le sens illustré par les figures, c'est-à-dire arrivée de liquide en haut, sortie en bas, avec une disposition des moyens d'entraînement telle qu'ils sont disposés à un niveau inférieur à la bille lorsque la vanne est fermée : en effet, avec une telle configuration, non seulement l'attraction magnétique, mais encore la pression statique qui s'exerce sur la bille, tendent à forcer l'appui du clapet sur le siège.

Le mode de fonctionnement qui vient d'être décrit, sera identique pour les variantes de la présente vanne, à ceci près que le dispositif de commande, c'est-à-dire les moyens 130 d'entraînement et le nombre de billes ainsi que leur disposition dans l'obturateur 20 seront modifiés.

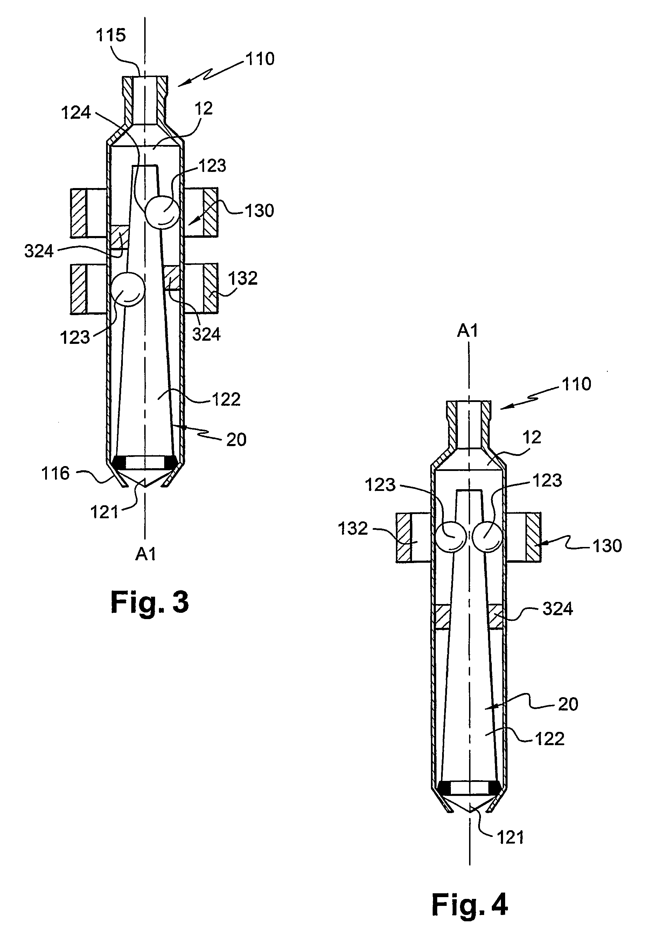

Sur la variante de la figure 3, la vanne 110 a une structure générale tubulaire, en matière amagnétique, délimitant la chambre 12. Le fluide s'écoule dans l'intervalle compris entre l'obturateur 20 et la chambre 12.

Dans cette variante, la vanne comporte, de façon similaire à celle illustrée en regard des figures 1 et 2, à sa partie supérieure, un orifice 115 destiné à être relié à un réservoir d'alimentation (non représenté) et qui débouche dans la chambre 12. Cet orifice 115 est de section rétrécie par rapport à la section transversale de la chambre 12. La partie inférieure de la chambre 12 s'achève sur un siège 116 d'obturation destiné à recevoir une partie correspondante d'un obturateur 20. Le siège a une forme générale tronconique et est prolongé vers le bas par une portion cylindrique de diamètre inférieur au diamètre de la chambre 12, formant l'orifice de sortie de la vanne proprement dit. Le siège 116 permet d'assurer l'étanchéité de la vanne lors de la fermeture par l'intermédiaire du clapet 121 placé en regard.

Comme visible sur la figure 3, le diamètre de la partie supérieure du fût 122 de l'obturateur est inférieur à celui de la chambre 12 et a tendance à augmenter de façon tronconique, de la partie supérieure à la partie inférieure où se trouve le clapet 121.

Selon cette variante, la première partie du dispositif de commande de l'obturateur 20 comprend deux billes 123 décalées axialement et diamétralement. Deux éléments 324 de centrage en forme d'ergots ou d'ailettes, en matériau amagnétique, permettant de stabiliser l'obturateur 20, sont positionnés sur le fût 122 de l'obturateur 20 ou alternativement sur la paroi interne de la chambre 12 de façon à réaliser un centrage de l'obturateur 20 dans la chambre 12, toutefois en permettant un libre déplacement de l'obturateur 20 : en d'autres termes, un jeu est laissé entre les éléments 324 de centrage et la paroi interne de la chambre 12 ou alternativement le fût de l'obturateur 20.

Conformément à cette variante, le fût est pourvu d'autant de logements 124 que le dispositif comporte de billes. Chaque logement 124 possède des dimensions telles que lorsque l'obturateur 20 est en place, c'est-à-dire centré avec les éléments 324 de centrage, chaque logement reçoit une bille, laquelle peut tourner librement dans ledit logement et sur la paroi interne latérale de la chambre 12.

Les moyens 130 d'entraînement sont agencés ici de façon telle que chacune des billes est associée à au moins une bobine ou un aimant 132 qui lui est propre. De plus, les au moins une bobine ou aimant 132 sont assemblés de façon à se déplacer en même temps.

Le mode de réalisation qui vient d'être décrit n'est qu'un exemple non limitatif. En effet, on pourra voir d'autres dispositions constructives telles que la répartition des billes sur l'obturateur 20 ou la répartition des éléments 324 d'appui sur le corps de l'obturateur 20 ou bien dans la chambre 12 sont modifiés.

En fonctionnement, la vanne est normalement maintenue fermée par le dispositif de commande magnétique qui tend à ramener le clapet en appui sur le siège, ainsi que par le poids de l'obturateur 20 et par la pression statique qui s'exerce sur les billes si les bobines ou aimants 132 sont disposés à un niveau tel que leur force d'attraction se situe au-dessous du plan diamétral des billes et si la vanne est disposée dans le sens vertical comme sur la figure 3 (clapet en bas). Lors de l'utilisation, les moyens 130 d'entraînement et donc les au moins une bobine ou aimant 132 sont déplacés et l'attraction magnétique tend à déplacer les billes qui entraînent l'obturateur 20.

Sur la figure 4, est représentée une autre variante, dans laquelle le dispositif de commande comporte deux billes placées cette fois-ci sur une même section transversale, et diamétralement opposées. Cette disposition améliore encore le fonctionnement de l'obturateur 20.

Le dispositif de commande comporte par ailleurs des moyens 130 d'entraînement agencés pour tenir compte de la disposition des deux billes 123 sur une même section. A cet effet, les moyens 130 d'entraînement comportent un corps magnétique cylindrique qui porte deux aimants 132 diamétralement opposés, disposés de part et d'autre de la paroi extérieure du corps tubulaire limitant la chambre 12 de façon à obtenir le meilleur couplage entre les aimants et les deux billes.

En ce qui concerne le centrage, il est amélioré en prévoyant des éléments d'appui 324 en dessous du dispositif de commande constitué par les billes, sur le corps tubulaire de la vanne ou sur le corps de l'obturateur 20 de façon à réaliser le meilleur centrage possible. Dans l'exemple illustré, ces éléments sont des ailettes portées par l'obturateur 20.

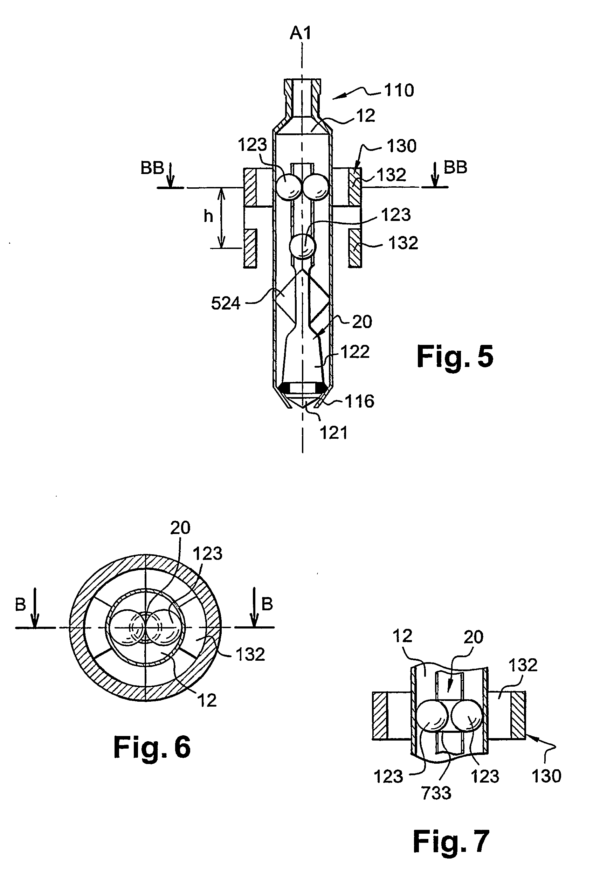

Sur la figure 5 est illustrée une autre variante de vanne. Celle-ci est similaire à celles vue précédemment à ceci près que le centrage est réalisé de manière différente. En fait, la vanne comprend deux dispositifs de commande identiques, qui comportent chacun deux billes 123 placées sur une même section transversale de l'obturateur 20. Les deux dispositifs sont centrés sur l'axe A1 de la vanne, mais d'une part sont décalés longitudinalement sur cet axe d'une distance "h" ; et d'autre part sont décalés angulairement l'un par rapport à l'autre, de préférence de 90° de façon à mieux répartir la force de levage et de mieux centrer l'obturateur 20. En d'autres termes, les deux billes d'un premier dispositif sont portées par un premier plan passant par l'axe A1 de la vanne, et les deux billes du second dispositif sont portées par un second plan passant par l'axe A1 de la vanne, et perpendiculaire au premier ; par ailleurs, les deux billes d'un même dispositif sont disposées sur une même section perpendiculaire à l'axe A1 ; les deux billes de l'autre sont portées sur une seconde section perpendiculaire à l'axe A1, mais décalée d'une distance "h" par rapport à la première. De préférence, comme illustré, le guidage est complété de manière connue par deux ailettes 524 imbriquées l'une dans l'autre perpendiculairement, et décalées longitudinalement par rapport aux dispositifs de commande, ici placées en aval des dispositifs, dans le sens d'écoulement du fluide, et portées par le fût de l'obturateur 20. Le fût 122 de l'obturateur 20 se termine sur une partie tronconique sous laquelle se situe le clapet 121.

La vanne selon cette variante comporte des moyens 130 d'entraînement avec deux jeux bobines ou d'aimants 132, qui sont liés mécaniquement entre eux de façon à se déplacer en même temps, et sont disposés de façon à réaliser l'un un couplage avec les deux billes d'une même section, l'autre avec les deux billes de l'autre section, décalée d'une distance "h".

La figure 6 est une vue schématique en coupe transversale BB de la figure 5 au niveau de l'un des dispositifs de commande. On distingue dans son ensemble le corps tubulaire de la vanne délimitant la chambre 12 dans laquelle coulisse l'obturateur 20 à l'aide des billes qui sont chacune disposées dans un logement respectif de l'obturateur 20. A l'extérieur du corps de la vanne, on observe les moyens 130 d'entraînement qui comportent un corps magnétique cylindrique. Celui-ci porte deux aimants 132 dont les pôles magnétiques sont de préférence inversés l'un par rapport à l'autre. Ils sont placés de part et d'autre de la paroi extérieure du corps tubulaire de façon à faire converger les lignes de flux magnétique vers les deux billes 123 afin d'obtenir le meilleur couplage.

La figure 7 est une vue en coupe axiale B-B de la figure 6 illustrant l'agencement des billes 123 et de l'obturateur 20 dans la chambre 12 de la vanne. Sur une même section transversale de l'obturateur 20, est percé un trou 733, dont le diamètre est tel que les deux billes 123 d'une même section ne peuvent pas se coller entre elles sous l'effet de l'attraction magnétique. Cet agencement est introduit dans la chambre 12 de la vanne de façon à coulisser librement en translation. Sur la même section transversale, mais à l'extérieur du corps de la vanne, se trouve l'autre partie du dispositif de commande, c'est-à-dire les moyens 130 d'entraînement avec les bobines ou aimants 132.

Le mode de fonctionnement de ce type de vanne est identique à celui décrit dans les figures précédentes.

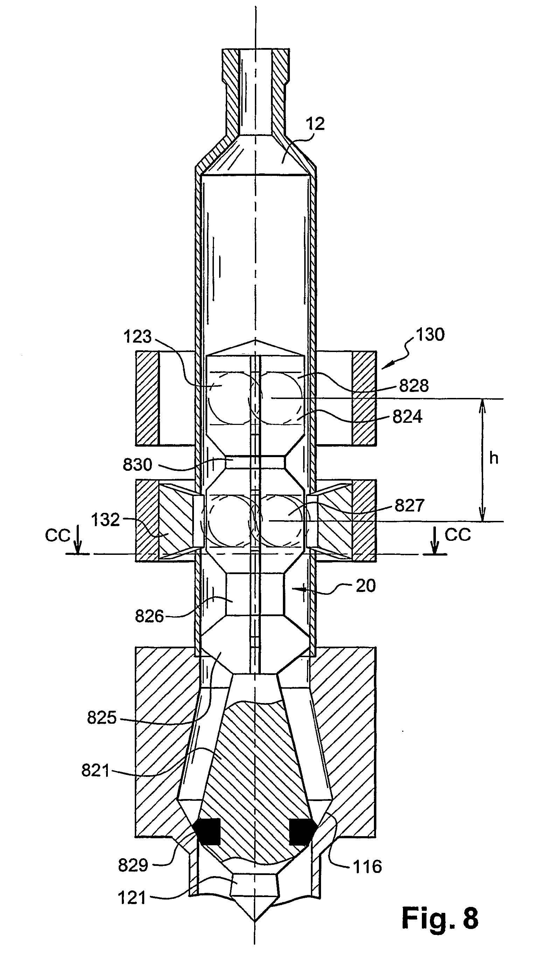

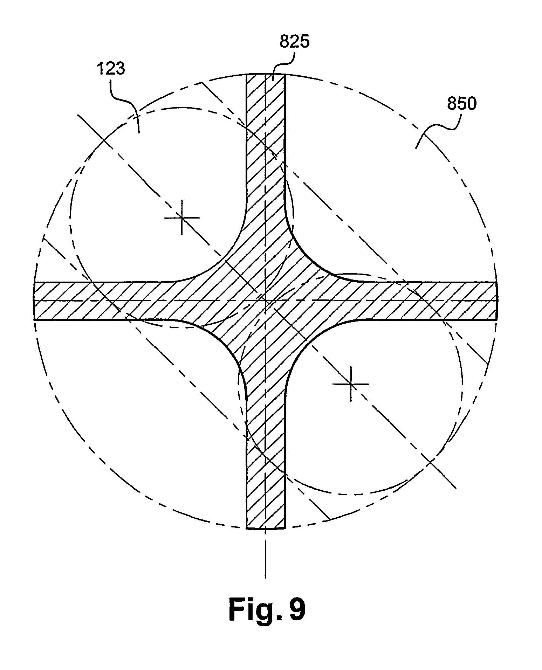

Dans le mode de réalisation décrit en regard des figures 8 et 9, cette dernière étant une vue en coupe CC de la figure 8, la vanne comporte des moyens 130 d'entraînement avec deux jeux de bobines ou d'aimants 132 placés à l'extérieur du corps de la vanne et qui sont décalés longitudinalement sur l'axe A1, de façon à magnétiser chacun deux billes 123 disposées sur une même section transversale de l'obturateur. Les deux jeux de bobines ou d'aimants 132 sont par ailleurs rendus solidaires l'un de l'autre de façon à se déplacer en même temps. Chaque jeu est semblable à celui de la figure 5, c'est-à-dire qu'il comporte un corps avec deux bobines ou aimants 132 de part et d'autre de la paroi extérieure du corps tubulaire de façon à orienter les lignes de flux magnétique pour obtenir le meilleur couplage avec les billes.

L'obturateur 20 se termine par un clapet 121 placé dans sa partie inférieure, prolongeant le fût. De préférence, comme illustré, un joint 829 entoure le clapet.

Le clapet présente une section tronconique destinée à coopérer avec un siège 116 de la vanne de façon à réaliser une étanchéité en position fermée.

De préférence, l'obturateur 20 est usiné à partir d'une seule pièce de façon à ce que son montage ne nécessite pas un soudage qui présenterait le risque d'entraîner une déformation au niveau de la jonction lors de sa réalisation. Une telle opération aurait donc pour effet de diminuer la précision du centrage de l'obturateur 20 dans la chambre.

Comme visible sur la figure 8, le clapet est surmonté d'une autre section 821 tronconique qui est surmontée par deux ailettes 825 imbriquées l'une dans l'autre perpendiculairement, et qui permettent le centrage de l'obturateur 20 dans la chambre 12 de la vanne, tout en permettant au liquide de circuler en 950 (figure 9) entre les ailettes 825.

Les ailettes sont surmontées par une partie 826 cylindrique dont le diamètre est inférieur au diamètre de la chambre 12, laquelle partie 826 cylindrique elle-même est surmontée par deux autres parties 827, 828, décalées longitudinalement d'une distance "h", qui contiennent chacune les deux billes 123 susmentionnées, placées sur une même section transversale. Ces deux parties 827, 828, sont séparées l'une de l'autre par une section 830 cylindrique intermédiaire. Comme dans le cas précédent, de préférence, les billes d'une même section sont diamétralement opposées ; les billes sont décalées angulairement de 90° d'une section à l'autre.

De préférence, le diamètre intérieur de la chambre est sensiblement supérieur à la somme des diamètres des deux billes.

Les billes d'une même section sont disposées dans un logement 824 constitué ici par un alésage transversal, ménagé dans le fût, lequel alésage est d'un diamètre sensiblement supérieur à celui des billes de façon à ce qu'elles puissent y évoluer librement. Il convient de noter que les ailettes 825, quant à elles, sont également réalisées par usinage dans la pièce constituant le fût.

La figure 9 permet de visualiser schématiquement, selon une coupe CC de la figure 8, une section de l'obturateur avec le logement 824 dans lequel se logent les deux billes 123 de cette section, et la disposition relative des billes et des ailettes 825, de même que les passages 850 laissés libres pour le fluide.

Bien entendu, l'invention n'est pas limitée aux modes de réalisation décrits et on peut y apporter des variantes de conception sans sortir du cadre de l'invention telle que définie par les revendications. En particulier, le dispositif de commande peut être équipé d'un nombre de billes différent (plus de deux billes par section ; plus de deux sections équipées de billes).

Bien que les modes de réalisation illustrés par les figures ne montrent que des vannes à débit tout ou rien, on peut envisager la possibilité de créer des vannes à débit variable. Pour ce faire, il suffit de faire varier les dimensions de l'intervalle compris entre la chambre 12 et l'obturateur 20.

## Revendications

1. Vanne (110) comprenant un obturateur (20) disposé dans une chambre (12) ménagée dans le corps de la vanne, une extrémité de ladite chambre étant pourvue d'un siège (116) contre lequel une partie, formant clapet, de l'obturateur est en appui dans une position de fermeture de la vanne et en est éloigné dans une position d'ouverture de la vanne, et un dispositif de commande magnétique avec des moyens (130) d'entraînement magnétique de l'obturateur, disposés à l'extérieur de la chambre, pour le mettre soit dans sa position de fermeture soit dans sa position d'ouverture, est **caractérisée en ce que** le dispositif de commande magnétique comporte par ailleurs au moins une bille (123) en matériau magnétique disposée dans la chambre et qui est couplée avec les moyens (130) d'entraînement magnétique extérieurs, la dite bille étant associée à l'obturateur afin de l'entraîner dans la chambre (12) lorsque la bille est elle-même entraînée par les moyens d'entraînement magnétique extérieurs.

2. Vanne selon la revendication 1, **caractérisée en ce que** la bille (123) tourne librement relativement à l'obturateur (20).

3. Vanne selon l'une des revendications 1 et 2, **caractérisée en ce que** l'obturateur (20) comporte au moins un logement (124, 824) dans lequel est placée au moins une bille.

4. Vanne selon l'une des revendications 1 à 3, **caractérisée en ce qu'**elle est agencée pour permettre le centrage de l'obturateur dans le corps de la vanne.

5. Vanne selon la revendication 4, **caractérisée en ce que** l'obturateur est associé à au moins deux billes qui coopèrent avec celui-ci et le corps de la vanne de façon à réaliser le centrage sous l'action des moyens d'entraînement magnétique extérieur.

6. Vanne selon la revendication 4, **caractérisée en ce que** des moyens de centrage (324) sont disposés à l'intérieur de la chambre, sur sa paroi latérale, de façon à coopérer avec l'obturateur.

7. Vanne selon la revendication 4, **caractérisée en ce que** des moyens de centrage (324) sont disposés sur l'obturateur de façon à coopérer avec la paroi latérale, interne de la chambre.

8. Vanne selon l'une des revendications 6 ou 7, **caractérisée en ce que** les moyens de centrage sont des ailettes (524 ; 825).

9. Vanne selon l'une des revendications précédentes, **caractérisée en ce que** ledit obturateur est associé à au moins deux billes décalées longitudinalement par rapport à l'axe de l'obturateur.

10. Vanne selon l'une des revendications précédentes, **caractérisée en ce qu'**au moins une section de l'obturateur est associée à au moins deux billes qui sont décalées angulairement l'une par rapport à l'autre.

11. Vanne selon l'une des revendications précédentes, **caractérisée en ce que** deux sections distinctes de l'obturateur sont chacune associées à au moins deux billes disposées de façon à ce que le décalage angulaire entre deux billes successives d'une même section soit inférieur ou égal à 180°.

12. Vanne selon l'une des revendications précédentes, **caractérisée en ce que** les (n) billes d'une section sont décalées angulairement d'un angle égal à 360°/n.

13. Vanne selon l'une des revendications précédentes, **caractérisée en ce qu'**au moins une gorge (113) de passage du fluide est usinée dans la paroi interne de la chambre (12), et une zone (114) de roulement est réalisée de part et d'autre de la gorge.

14. Vanne selon l'une des revendications précédentes, **caractérisée en ce que** les moyens (130) d'entraînement, placés à l'extérieur du corps de la vanne, sont agencés pour être déplacés selon une direction (133) parallèle à l'axe (A1) longitudinal de la vanne de façon à entraîner simultanément la au moins une bille (123).

15. Vanne selon la revendication 14, **caractérisée en ce que** les moyens (130) d'entraînement comprennent au moins un aimant (132).

## Claims

1. A valve (110) comprising a shutter (20) placed in a chamber (12) provided in a valve body, an end of said chamber being provided with a seat (116) against which a flap-forming part of the shutter rests in a closed position of the valve and is remote therefrom in a open position of the valve, and a magnetic control device including shutter magnetic drive means (130) disposed outside the chamber for moving it either to its closed position or to its open position, **characterized in that** the magnetic control device further comprises at least one ball (123) made of a magnetic material which is housed in the chamber and which is coupled to the external magnetic drive means (130), said ball being associated with the shutter so as to drive the shutter into the chamber (12) when said ball is itself moved by the external magnetic drive means.

2. The valve as claimed in claim 1, **characterized in that** the ball (123) rolls freely relative to the shutter (20).

3. The valve as claimed in one of claims 1 and 2, **characterized in that** the shutter (20) includes at least one housing (124, 824) in which at least one ball is placed.

4. The valve as claimed in one of claims 1 to 3, **characterized in that** it is adapted to allow the shutter to be centered in the valve body.

5. The valve as claimed in claim 4, **characterized in that** the shutter is associated with at least two balls that cooperate with it and the valve body to provide centering by the external magnetic drive means.

6. The valve as claimed in claim 4, **characterized in that** centering means (324) are disposed inside the chamber, on its lateral wall, so as to cooperate with the shutter.

7. The valve as claimed in claim 4, **characterized in that** centering means (324) are disposed on the shutter so as to cooperate with the internal lateral wall of the chamber.

8. The valve as claimed in either claim 6 or 7, **characterized in that** the centering means are fins (524; 825).

9. The valve as claimed in one of the preceding claims, **characterized in that** said shutter is associated with at least two balls offset longitudinally relative to the axis of the shutter.

10. The valve as claimed in one of the preceding claims, **characterized in that** at least one section of the shutter is associated with at least two balls that are offset angularly relative to each other.

11. The valve as claimed in one of the preceding claims, **characterized in that** two separate sections of the shutter are each associated with at least two balls disposed so that the angular offset between two successive balls of a same section is less than or equal to 180°.

12. The valve as claimed in one of the preceding claims, **characterized in that** the (n) balls of a section are offset angularly by an angle equal to 360°/n.

13. The valve as claimed in one of the preceding claims, **characterized in that** at least one fluid passage groove (113) is machined in the inside wall of said chamber (12) and a rolling area (114) is formed on either side of said groove.

14. The valve as claimed in one of the preceding claims, **characterized in that** the drive means (130) placed outside the valve body are adapted to be moved along a direction (133) parallel to the longitudinal axis (A1) of the valve so as to drive the at least one ball (123) simultaneously.

15. The valve as claimed in claim 14, **characterized in that** the drive means (130) comprise at least one magnet (132).

## Patentansprüche

1. Ventil (110), mit einem in einer im Ventilkörper vorgesehenen Kammer (12) angeordneten Verschluss (20), wobei ein Ende dieser Kammer mit einem Sitz (116) versehen ist, gegen den in der geschlossenen Position des Ventils ein als Klappe dienendes Teil des Verschlusses anliegt und in der geöffneten Position des Ventils davon entfernt ist, sowie einer magnetischen Steuervorrichtung mit außerhalb der Kammer angeordneten Mitteln (130) für den Magnetantrieb des Verschlusses, um ihn entweder in die geschlossene Position oder in die geöffnete Position zu versetzen, **dadurch gekennzeichnet, dass** die magnetische Steuervorrichtung ferner mindestens eine Kugel (123) aus einem magnetischen Werkstoff umfasst, die in der Kammer angeordnet und mit den äußeren Magnetantriebsmitteln (130) gekoppelt ist, wobei die Kugel dem Verschluss derart zugeordnet ist, dass sie ihn bei Antrieb der Kugel selbst durch die äußeren Magnetantriebsmittel (130) in der Kammer (12) mitnimmt.

2. Ventil nach Anspruch 1, **dadurch gekennzeichnet, dass** sich die Kugel (123) relativ zum Verschluss (20) frei dreht.

3. Ventil nach einem der Ansprüche 1 und 2, **dadurch gekennzeichnet, dass** der Verschluss (20) mindestens eine Aufnahme (124, 824) umfasst, in der sich mindestens eine Kugel befindet.

4. Ventil nach einem der Ansprüche 1 bis 3, **dadurch gekennzeichnet, dass** es so gestaltet ist, dass der Verschluss im Ventilkörper zentriert werden kann.

5. Ventil nach Anspruch 4, **dadurch gekennzeichnet, dass** dem Verschluss mindestens zwei Kugeln zugeordnet sind, die mit ihm und dem Ventilkörper derart zusammenwirken, dass die Zentrierung unter Einwirkung der äußeren Magnetantriebsmittel erfolgt.

6. Ventil nach Anspruch 4, **dadurch gekennzeichnet, dass** die Zentriermittel (324) im Inneren der Kammer an der Seitenwand angeordnet sind, um mit dem Verschluss zusammenzuwirken.

7. Ventil nach Anspruch 4, **dadurch gekennzeichnet, dass** die Zentriermittel (324) derart an dem Verschluss angeordnet sind, dass sie mit der inneren Seitenwand der Kammer zusammenwirken.

8. Ventil nach einem der Ansprüche 6 oder 7, **dadurch gekennzeichnet, dass** die Zentriermittel Stege (524; 825) sind.

9. Ventil nach einem der vorhergehenden Ansprüche, **dadurch gekennzeichnet, dass** dem Verschluss mindestens zwei Kugeln zugeordnet sind, die relative zur Achse des Verschlusses in Längsrichtung versetzt sind.

10. Ventil nach einem der vorhergehenden Ansprüche, **dadurch gekennzeichnet, dass** mindestens einem Abschnitt des Verschlusses mindestens zwei Kugeln zugeordnet sind, die in einem Winkel zueinander versetzt sind.

11. Ventil nach einem der vorhergehenden Ansprüche, **dadurch gekennzeichnet, dass** zwei getrennten Abschnitten des Verschlusses jeweils mindestens zwei Kugeln zugeordnet sind, die derart angeordnet sind, dass die Winkelverschiebung zwischen zwei aufeinander folgenden Kugeln eines selben Abschnitts geringer als oder gleich 180° ist.

12. Ventil nach einem der vorhergehenden Ansprüche, **dadurch gekennzeichnet, dass** die (n) Kugeln eines Abschnitts um einen Winkel von 360°/n versetzt sind.

13. Ventil nach einem der vorhergehenden Ansprüche, **dadurch gekennzeichnet, dass** in der Innenwand der Kammer (12) mindestens eine Rille (113) zum Durchlaufen einer Flüssigkeit gefertigt ist und auf beiden Seiten der Rille ein Abrollbereich (114) ausgeführt ist.

14. Ventil nach einem der vorhergehenden Ansprüche, **dadurch gekennzeichnet, dass** die außerhalb des Ventilkörpers angeordneten Antriebsmittel (130) derart gestaltet sind, dass sie in einer Richtung (133) parallel zur Längsachse (A1) des Ventils verschoben werden können, um zeitgleich die mindestens eine Kugel (123) mitzunehmen.

15. Ventil nach Anspruch 14, **dadurch gekennzeichnet, dass** die Antriebsmittel (130) mindestens einen Magneten (132) umfassen.
